# EUROPÄISCHE PATENTSCHRIFT

(11) **EP 1 642 950 B1**
(45) Veröffentlichungstag und Bekanntmachung des Hinweises auf die Patenterteilung: **14.11.2012**
(21) Anmeldenummer: 05108182.6
(22) Anmeldetag: 07.09.2005
(51) Int. Cl.: C09J 7/02, C08J 9/32, C09J 11/00, C08K 7/22

(54) **Verfahren zur Herstellung von Selbstklebebändern mit expandierten Mikroballons in der Trägerschicht**
Process for producing self-adhesive tapes containing expanded micro-balloons in their support layer
Procédé de préparation de rubans auto-adhésifs avec des microsphères expansées dans la couche support

(30) Priorität: 29.09.2004 DE 102004047913
(43) Veröffentlichungstag der Anmeldung: 05.04.2006
(73) Patentinhaber: TESA SE, 20253 Hamburg (DE)
(72) Erfinder: Neuhaus-Steinmetz, Hermann, 22926, Ahrensburg (DE); Burmeister, Axel, 21244, Buchholz (DE); Stähr, Jochen, 22299 Hamburg (DE)
(74) Vertreter: Stubbe, Andreas

(56) Entgegenhaltungen:
- WO-A-95/32851
- WO-A-99/03943
- DE-A1- 19 527 923
- DE-A1- 19 527 926
- VOLKER SCHÖPPNER, PHILIPP KLOKE: 'Compounding', [Online] 21 Juli 2008, Seiten 1 - 15 Encyclopedia of Polymer Science and Technology Gefunden im Internet: <URL:http://onlinelibrary.wiley.com/store/1 0.1002/0471440264.pst075/asset/pst075.pdf?v =1&t=gt5tad69&s=77b945a4c7841d885a57aa58a25 8bb20a650b614> [gefunden am 2011-09-30]

## Beschreibung

Die Erfindung beschreibt Verfahren zur Herstellung von insbesondere beidseitig klebend ausgerüsteten Selbstklebebändern mit expandierten Mikroballons in der Trägerschicht, die bevorzugt zur Erzielung von sehr dauerhaften Verklebungen von Gegenständen mit Unebenheiten in den zu verklebenden Oberflächen eingesetzt werden.

Um höhere Festigkeiten gegenüber Abschälen und Scherkräften zu erreichen, ist der Einsatz unterschiedlicher Klebebänder bekannt.

In der DE 21 05 877 C wird ein Klebeband aufgezeigt, das aus einem Träger besteht, der auf mindestens einer Seite mit einem mikrozellulären druckempfindlichen Klebstoff beschichtet ist und dessen Klebstoffschicht einen Keimbildner enthält, wobei die Zellen der Klebstoffschicht geschlossen und vollständig in der Klebstoffschicht verteilt sind. Dieses Klebeband kann sich der unregelmäßigen Oberfläche, auf die es gebracht wird, anpassen und somit zu einer relativ dauerhaften Verklebung führen, zeigt andererseits auch nur eine geringe Erholung, wenn es auf die Hälfte der ursprünglichen Dicke zusammengedrückt worden ist. Die Hohlräume in der Klebmasse bieten allerdings Ansätze für seitliches Eintreten von Lösungsmitteln und Wasser in die Klebfuge, was sehr unerwünscht ist. Weiterhin kann der vollständige Durchtritt von Lösungsmitteln oder Wasser durch das gesamte Klebeband nicht ausgeschlossen werden.

So beschreibt die DE 28 21 606 C ein druckempfindliches Klebeband mit einer Klebstoffschicht auf einem Trägermaterial, in der Glasmikrohohlkugeln mit einem Anteil von bis zu 60 Volumenprozent der Klebstoffschicht dispergiert sind. Dieses Klebeband bietet aufgrund seines Aufbaus eine gute Festigkeit gegenüber den oben genannten Belastungen. Das Band besitzt den technischen Vorteil, sich von Unebenheiten des Untergrundes kaum abzuheben, weil diesem die elastische Erholung fehlt, nachdem ein Druck eine Zeitlang auf dieses ausgeübt worden ist. Aber auch dies Klebeband ist mit einigen Nachteilen behaftet. So sind Glasmikrohohlkugeln sehr empfindliche Körper, die beim Einarbeiten in die Klebstoffschicht, beim Lagern, insbesondere aber beim Einsatz des Bandes zum Zerplatzen neigen, mit anschließenden Folgeproblemen aufgrund der entstehenden Splitter.

ln der DE 40 29 896 A1 wird ein trägerloses, beidseitig klebendes Selbstklebeband aus einer druckempfindlichen Klebstoffschicht, die Glasmikrovollkugeln enthält, beschrieben.

ln DE 196 03 919 A1 wird ein beidseitig mit einem druckempfindlichen Kleber beschichtetes Selbstklebeband beschrieben, das eine Trägerschicht aus Kautschuk aufweist, in die Mikrovollkugeln, insbesondere solche aus Glas eingemischt sind.

In der EP 0 257 984 A1 werden Klebebänder offenbart, die auf einer Trägerschicht zumindest einseitig eine Klebebeschichtung aufweisen. In dieser Klebebeschichtung sind Polymerkügelchen enthalten, die ihrerseits eine Flüssigkeit aus Kohlenwasserstoffen enthalten. Bei erhöhten Temperaturen neigen die Polymerkügelchen zur Expansion.

Allen genannten Klebebändern ist gemeinsam, dass die aufnehmbaren Scherkräfte, die auf die geklebte Verbindung einwirken, für viele Einsatzfälle nicht ausreichend sind, um eine dauerhafte Verbindung zwischen Untergrund und dem mittels des Klebebandes zu montierenden Gegenstandes zu gewährleisten. So ist insbesondere bei tieferen Temperaturen die Verwendung derartiger Klebebänder nur sehr eingeschränkt möglich, weil bei tiefen Temperaturen eine Versprödung des Trägers auftritt, so dass das Klebeband nicht mehr in der Lage ist, die gewünschte Verklebung aufrechtzuerhalten. Auch bei höheren Temperaturen reduzieren sich die Klebkräfte der Klebebänder, unter anderem aufgrund von Fließprozessen. Damit ist eine Verwendung der Klebebänder unter hohen Temperaturen nicht oder nur sehr eingeschränkt möglich.

In der DE 197 30 854 A1 wird zur Beseitigung der oben beschriebenen Nachteile eine mit Mikroballons aufgeschäumte Trägerschicht vorgeschlagen.

In der WO 95/32851 A ist ein Verfahren zur Herstellung eines Klebebandträgers beschrieben, der aus einer Kernschicht mit Mikroballons besteht, die während eines Extrusionsvorganges aufgeschäumt werden. Allerdings handelt es bei der Extrusion um einen Coextrusionsvorgangs, das heißt, dass gleichzeitig mit der Kernschicht zwei auf der Kernschicht liegende Außenschichten coextrudiert werden. Die Mikroballons, die sich innerhalb einer sie umgebenden Masse befinden, werden während der Coextrusion mit anderen Schichten aufgeschäumt.

Bei Mikroballons handelt es sich um elastische, thermoplastische Hohlkugeln, die eine Polymerhülle aufweisen. Diese Kugeln sind mit niedrigsiedenden Flüssigkeiten oder verflüssigtem Gas gefüllt. Als Polymere für die Hülle sind insbesondere Acrylnitril, PVDC, PVC oder Acrylate geeignet. Als niedrigsiedende Flüssigkeit kommen Kohlenwasserstoffe wie die niederen Alkane, beispielsweise Pentan, als verflüssigtes Gas Chemikalien wie lsobutan in Frage.
Durch Wärmeeinwirkung verdampft zum einen die in den Mikroballons enthaltene Flüssigkeit, zum anderen erweicht die äußere Polymerhülle. Somit dehnen sich die Kapseln irreversibel aus und expandieren dreidimensional. Die Expansion ist beendet, wenn sich der Innen- und der Außendruck ausgleichen. So erzielt man einen geschlossenzelligen Schaumträger.
Die Anfertigung der Trägermischung findet vorzugsweise in einem für die Elastomer-Compoundierung typischen Innenmischer statt. Die Mischung wird dabei insbesondere auf einen Mooneywert ML₁₊₃ (100 °C) im Range von 10 bis 80 eingestellt. Der Mischung werden in einem zweiten kühlen Arbeitsgang mögliche Vernetzer, Beschleuniger und die gewünschten Mikroballons zugesetzt. Dieser zweite Arbeitsgang findet vorzugsweise bei Temperaturen kleiner 70 °C in einem Kneter, Innenmischer, Mischwalzwerk oder Doppelschneckenextruder statt. Die Mischung wird anschließend auf Maschinen auf die gewünschte Dicke extrudiert und/oder kalandert.
Anschließend wird der Träger beidseitig mit einer druckempfindlichen Selbstklebemasse versehen.
Darauf folgen die Schritte der thermischen Schäumung und der gegebenenfalls vorhandenen Vernetzung.

Die Expansion der Mikroballons kann dabei entweder vor dem Einarbeiten derselben in die Polymermatrix erfolgen oder erst nach dem Ausformen der Polymermatrix zu einem Träger.
Nachteilig ist die vorgeschlagne Expansion der Mikroballons noch vor dem Einarbeiten in die Polymermatrix des Trägermaterials. Hierbei werden durch die hohen Kräfte bei der Einarbeitung der expandierten Mikroballons viele Ballons zerstört, so dass der Expansionsgrad reduziert wird. Weiterhin führen teilweise geschädigte Mikroballons zu Dickenschwankungen. Ein robuster Herstellprozess ist kaum zu erreichen.
Entsprechend wird favorisiert, die Schäumung nach der bahnförmigen Ausformung in einem Thermokanal durchzuführen. Aber auch hierbei kommt es leicht zu stärkeren Abweichungen der mittleren Trägerdicke von der gewünschten Dicke auf Grund nicht exakt konstanten Bedingungen des Gesamtprozesses vor der Schäumung wie nicht exakt konstanter Bedingungen im Kanal während der Schäumung. Eine geziette Korrektur der Dicke ist nicht mehr möglich. Ebenso müssen erhebliche statistische Abweichungen in der Dicke in Kauf genommen werden, da sich lokale Abweichungen in der Konzentration von Mikroballons und auch anderer Trägerbestandteile direkt in Dickenschwankungen bemerkbar machen.

Der Erfindung liegt die Aufgabe zugrunde, Verfahren zu schaffen, mit denen insbesondere beidseitig klebend ausgerüstete Selbstklebebänder mit Mikroballons in der Trägerschicht herzustellen sind und die die Nachteile des Standes der Technik, wie sie insbesondere aus der DE 197 30 854 A1 bekannt sind, nicht oder zumindest nicht in dem Umfang aufweisen. Weiterhin soll die Einsatzfähigkeit der nach den erfindungsgemäßen Verfahren hergestellten Produkte nicht eingeschränkt sein.

Gelöst wird die Aufgabe durch Verfahren, wie sie in den Hauptansprüchen dargelegt sind. Weiterbildungen der erfindungsgemäßen Verfahren sind dabei Gegenstand der Unteransprüche.

Demgemäß besteht die Erfindung in einem Verfahren zur Herstellung eines ein- oder beidseitig mit einer druckempfindlichen Klebemasse beschichteten Selbstklebebandes, das eine Trägerschicht aufweist, die expandierte Mikroballons zu einem Volumenanteil von 1 Vol.-% bis 98 Vol.-%, insbesondere 30 Vol.-% bis 70 Vol.-%, enthält, wobei
- zur Bildung der Trägerschicht Natur-, Acrylnitril-Butadien-, Butyl-, Styrol-Butadien-Kautschuke oder ein Blend der genannten Kautschuke eingesetzt werden,
- die Trägerbestandteile in einem Mischaggregat, wobei es sich bei dem Mischaggregat um einen Innenmischer und einem daran anschließenden Kneter, in dem mögliche Vernetzer oder Beschleuniger zugesetzt werden, handelt, gemischt werden,
- die nicht expandierten Mikroballons erst nach Abkühlung der aus dem Mischaggregat stammenden Trägermischung in einem Walzenstuhl in dieselbe eingearbeitet werden,
- die Trägermischung mitsamt der nicht expandierten Mikroballons in ein Förderaggregat, wobei es sich bei dem Förderaggregat um einen Extruder handelt, aufgegeben wird,
- die Mikroballons expandiert werden,
- die Trägermischung mitsamt der expandierten Mikroballons in einem Ausformaggregat, wobei es sich bei dem Ausformaggregat um einen Kalander handelt, zu einer Trägerschicht ausgeformt wird
- die Trägerschicht ein- oder beidseitig mit einer druckempfindlichen Klebemasse beschichtet wird.

Die noch nicht expandierten Mikroballons werden erst nach Abkühlung der aus dem Mischaggregat stammenden Vormischung in dieselbe eingearbeitet, und zwar in einem Walzenstuhl. Hier erfolgt dann die Expansion der Mikroballons. Durch die spätere Hinzufügung der Mikroballons werden diese nicht während des gesamten Mischvorgangs gewalkt. Dies könnte zur vorzeitigen Zerstörung derselben führen.

Bei dem Mischaggregat handelt es sich um einen Innenmischer.

Bei dem Förderaggregat handelt es sich um einen Extruder.

In dem Förderaggregat kann die Ausformung der Trägermischung mitsamt der der expandierten Mikroballons in Fütterstreifen erfolgen, möglich ist auch die Ausformung zu einem Granulat.

Als Ausformaggregat, in dem das Trägermaterial mitsamt der expandierten Mikroballons zu einer Trägerschicht ausgeformt wird, finden Kalander Verwendung.

Als Trägerbestandteile zur Bildung der Trägerschicht werden Natur-, Acrylnitril-Butadien-, Butyl-, Styrol-Butadien-Kautschuke oder ein Blend der genannten Kautschuke eingesetzt.

Um die gewünschten Eigenschaften der resultierenden Trägerschicht gezielt einzustellen. können als weitere Trägerbestandteile Füllstoffe zugesetzt werden. So kann die Trägerschicht mit Ruß aus der Reihe der verstärkenden, semiverstärkenden oder nicht verstärkenden Ruße insbesondere zwischen 0 bis 80 phr. Zinkoxid insbesondere zwischen 0 bis 70 phr und/oder anderen Füllstoffen wie Kieselsäure, Silikaten oder Kreide versetzt werden. Neben den genannten ist auch die Verwendung weiterer Füllstoffe möglich. Weiterhin können auch Harze aus der Klasse der Phenol- und/oder Kohlenwasserstoffharze im Bereich insbesondere zwischen 0 bis 75 phr zugesetzt werden.

Zur Erhöhung der Standfestigkeit des Trägers kann dieser mit üblichen Alterungsschutzmitteln, die je nach Anwendungsfall aus der Klasse der verfärbenden oder nicht verfärbenden Alterungsschutzmitleln stammen können, insbesondere im Bereich zwischen 0 bis 10 phr, sowie bekannten Lichtschutzmitteln oder Ozonschutzmitteln gefüllt werden. Darüber hinaus sind eine Abmischung mit Vulkanisationsmitteln (wie beispielsweise Peroxiden oder Schwefel, Schwefelspendern oder Beschleunigern) und/oder ein Zusatz von Fettsäure, insbesondere im Bereich von 0 bis 10 phr, sowie eine Verwendung von Weichmachern möglich. Alle diese genannten Zusatzstoffe können je nach Einsatzzweck des späteren Selbstklebebandes entweder allein oder in beliebiger Kombination miteinander eingesetzt werden, um eine optimale Abstimmung des Trägers auf die Verwendung des Selbstklebebandes zu erhalten. Durch den Einsatz dieser Zusatzstoffe ist auch die Schwarzfärbung des Trägers problemlos möglich.

Bezüglich der Kautschuke wird auf die bekannte Technologie der Kautschuk-Verarbeitung und den bekannten, dafür eingesetzten Additiven, etwa gemäß dem Buch von Werner Kleemann (Werner Kleemann: "Mischungen für die Elastverarbeitung", Deutscher Verlag für Grundstoffindustrie, Leipzig 1982), ausdrücklich Bezug genommen.

Die Trägermischung wird insbesondere auf einen Mooneywert ML₁₊₃ (100 °C) im Range von 10 bis 80 eingestellt. Vorzugsweise erfolgt eine lösungsmittelfreie Verarbeitung. Der Mischung werden in einem zweiten kühlen Arbeitsgang mögliche Vernetzer und Beschleuniger zugesetzt. Dieser zweite Arbeitsgang sollte bei Temperaturen kleiner 70 °C in einem Kneter stattfinden. Die Mischung kann anschließend auf Maschinen auf die gewünschte Dicke kalandert werden.

Im Anschluss kann optional eine Elektronenstrahlhärtung durchgeführt werden. Neben der Elektronenstrahlhärtung kann auch eine Vernetzung mittels UV-Strahlen erfolgen. Je nach gewünschtem Vernetzungsgrad empfiehlt es sich, Promotoren und/oder Initiatoren der Trägerschicht zuzusetzen.

Dabei ergibt sich ein bevorzugtes Flächengewicht des Trägers, das im Bereich von 30 g/m² bis 2000 g/m², insbesondere 200 g/m² bis 1250 g/m², liegt.

Durch die Expansion der Mikroballons liegt des Dicke des Trägers vorzugsweise im Bereich von 200 µm bis 4000 µm, insbesondere 400 µm bis 2500 µm.

Um die Verankerung der Klebemasse auf dem Träger zu erhöhen, können Haftvermittler zugesetzt werden. Weiterhin kann das Aufbringen einer Primerbeschichtung auf den Träger erfolgen. Alternativ dazu kann auch eine Coronavorbehandlung des Trägers vorgenommen werden. Um besonders feste Verankerungen zu erzielen, ist auch eine Kombination der aufgeführten Verfahren möglich.

Um eine Migration der in der Trägerschicht eingesetzten Stoffe in die Kleberschicht zu unterbinden, wird in einer bevorzugten Ausführungsform der Verfahren zwischen Trägerschicht und Selbstklebemasse eine Sperrschicht mit einer Schichtdicke von 2 µm bis 10 µm, vorzugsweise 2 µm bis 4 µm, aufgebracht.

Die Klebemasse kann direkt aus der Lösung, Dispersion oder Schmelze oder im indirekten Transferverfahren aufgetragen werden. Das Auftragsgewicht der Klebemasse ist ebenfalls je nach Einsatzzweck beliebig innerhalb des Bereiches von 10 bis 250 g/m², vorzugsweise 40 bis 150 g/m², wählbar.

Bevorzugt werden Mikroballons, die bei 25 °C einen Durchmesser aufweisen von 3 µm bis 40 µm, insbesondere 5 µm bis 20 µm.

Durch Wärmeeinwirkung dehnen sich die Kapseln irreversibel aus und expandieren dreidimensional. Nach der thermischen Expansion aufgrund erhöhter Temperatur weisen die Mikroballons vorteilhafterweise einen Durchmesser von 20 µm bis 200 µm, insbesondere 40 µm bis 100 µm. auf.

Erfindungsgemäß erfolgt die Expansion der Mikroballons vor der Ausformung zu einer Trägerschicht.

Für den Fachmann überraschend sind dabei die sehr geringe Erhöhung der spezifischen Dichte des geschäumten Trägermaterials durch den Ausformungsprozess, die sehr geringen Schwankungen der Trägerdicke und die schnelle und einfache Einstellung der mittleren Trägerdicke auf die Solldicke über Verfahrensparameter bei der Ausformung.

Das nach den erfindungsgemäßen Verfahren gewonnene Selbstklebeband zeigt durch die Verwendung von Mikroballons in der Trägerschicht hervorragende Eigenschaften, die derartig nicht vorherzusehen waren.

Aufgrund der hohen Flexibilität des Trägers passt sich das Klebeband sehr gut unebenem Untergrund an, wenn es mit einem gewissen Druck auf diesen gepresst wird. Auf diese Weise entsteht eine sehr dauerhafte Verbindung zwischen Klebeband und Untergrund, die auch bei hohen Scherkräften, die auf das Selbstklebeband einwirken, nicht versagt. Wegen der fehlenden seitlich offenen Hohlräume im Träger wird auch das mögliche Eindringen von Lösungsmitteln oder Wasser in das Klebeband mit all seinen bekannten Nachteilen verhindert.

Weitere Vorteile der mit Mikroballons abgemischten Klebebänder gegenüber denen, die mit Mikrovollkugeln hergestellt sind, bestehen darin, dass die Mikroballons eine viel geringe Dichte haben und somit das Klebeband insgesamt leichter wird. Des Weiteren weisen erfindungsgemäße Klebebänder auch gegenüber der Hohlglaskugelvariante erhöhte Rückstellkräfte auf. Darüber hinaus weisen sie den Vorteil auf, dass nach Druckbelastung keine störenden Wandstücke die Leistungsfähigkeit mindern.

Schließlich kann noch der geringere Preis eines mit Mikroballons gefüllten Trägers gegenüber denen, die mit Hohl- oder Vollkugeln gefüllt sind, erwähnt werden.
Das Klebeband bietet eine ideale Kombination viskoelastischer Eigenschaften und mit hohem Rückstellmoment.

Zusammenfassend empfiehlt sich die Verwendung des Selbstklebebandes, wenn dauerhafte Verklebungen mit hoher Scherfestigkeit, Kippscherfestigkeit, hoher Klebkraft und hoher Kälteschlagfestigkeit erzielt werden sollen, beispielsweise in der Möbelindustrie, wo Spiegel, Leisten oder Blenden dauerhaft mit dem Untergrund zu verankern sind.
Wegen der hervorragenden Produkteigenschaften ist der Einsatz nicht auf das genannte Beispiel beschränkt. Vielmehr ist die Verwendung des Klebebandes in vielen Industriebereichen als Montagematerial möglich, wenn es gilt, auf einer relativ unebenen Oberfläche eine sichere Verbindung zwischen zwei Teilen unterschiedlichster Materialien zu schaffen.

lm Folgenden soll die Erfindung anhand eines Beispiels näher beschrieben werden, ohne damit die Erfindung unnötig einschränken zu wollen.

### Beispiel

Die Herstellung des Vorbatches der Trägermischung fand in einem für die Elastomer-Compoundierung typischen Innenmischer statt, und zwar bei einer Temperatur von 130 °C innerhalb von fünf Minuten. Die Mischung wurde dabei auf einen Mooneywert ML₁₊₃ (100 °C) von 26 eingestellt. Die Rezeptur des Vorbatches umfasst:

| Komponente | Anteil (phr) |
|---|---|
| Naturkautschuk CV 50 | 100,0 |
| Mahlkreide | 51,0 |
| Weichharz Wing Tack 10 (Firma Goodyear) | 20,0 |
| Zinkoxid | 5,0 |
| TiO₂ | 5,0 |
| Stearinsäure (Firma Pronova) | 1,0 |
| Summe Vorbatch | 182,0 |

Die Mischung wurde dann bei einer Temperatur von 45 °C für acht Minuten in einem Kneter fertig gestellt, wobei dem Vorbatch noch folgende Stoffe zugesetzt wurden:

| Komponente | Anteil (phr) |
|---|---|
| Vorbatch | 93,0 |
| Alterungsschutzmittel | 0,9 |
| Schwefel Rhenogran S-80 (Firma Rheinchemie ) | 0,3 |
| Summe Zwischenbatch | 94,2 |

Nach der Abkühlung wurden folgende weitere Stoffe dem Zwischenbatch in einem Walzenstuhl zugesetzt, wobei die Mikroballons und das Weißöl zur einfacheren und staub-ärmeren Verarbeitung schon in einem vorhergehenden Schritt miteinander gemischt wurden.

| Komponente | Anteil (Gew.-%) |
|---|---|
| Zwischenbatch | 94,2 |
| Beschleuniger Rhenogran ZEPC-80 (Firma Rheinchemie ) | 0,3 |
| Beschleuniger Rhenogran HX (Firma Rheinchemie ) | 0,1 |
| Mikroballons FQ 2134 (Firma Follmann) | 3,8 |
| Weißöl | 1,6 |
| Summe Endbatch | 100,0 |

Der Fütterextruder für einen Kalander zur Ausformung des Trägers wurde mit dem Endbatch gespeist. Die Expansion der Mikroballons im Fütterextruder wurde durch Einstellung einer Temperatur von 130 °C erreicht. Durch die Schäumung im Fütterextruder reduzierte sich die spezifische Dichte des Trägermaterials von 1,18 g/cm³ vor dem Extruder auf 0,59 g/cm³ nach dem Extruder.

Der Transport vom Fütterextruder zum Kalander erfolgte über ein kurzes Förderband.
Die Mischung wurde anschließend auf einem üblichen 4-Walzen F-Kalander zu einer Bahn mit einer Dicke von 1000 µm ausgewalzt und bei einer Bahngeschwindigkeit von 5 m/min über eine zusätzliche Andruckwalze auf einen Release-Liner gelegt und zu einer Rolle gewickelt. Nach der Ausformung zur Bahn wurde eine spezifische Dichte 0,61 g/cm³ ermittelt.

Der Träger wurde beidseitig mit einem Dispersionsprimer auf Epoxidbasis und einer Sperrschicht auf Polyamidbasis ausgerüstet.

Dann wurde in einer Kaschieranlage das Material in zwei Schritten beidseitig mit je 60 g/m² einer Polyacrylatmasse (hier Duroctac 280 - 1753 der Firma National Starch) im Transferverfahren beschichtet.

Weiterhin fand eine Vernetzung der Trägerschicht in einem Thermokanal statt, und zwar bei einer Temperatur von 130 °C bei einer Geschwindigkeit von 4 m/min. Dabei blieb die Dicke des Trägers von 1000 µm erhalten. Die Dickenschwankungen des Trägers lagen unter ± 20 µm.

## Patentansprüche

1. Verfahren zur Herstellung eines ein- oder beidseitig mit einer druckempfindlichen Klebemasse beschichteten Selbstklebebandes, das eine Trägerschicht aufweist, die expandierte Mikroballons zu einem Volumenanteil von 1 Vol.-% bis 98 Vol.-%, insbesondere 30 Vol.-% bis 70 Vol.-%, enthält, wobei
zur Bildung der Trägerschicht Natur-, Acrylnitril-Butadien-, Butyl-, Styrol-Butadien-Kautschuke oder ein Blend der genannten Kautschuke eingesetzt werden,
die Trägerbestandteile in einem Mischaggregat, wobei es sich bei dem Mischaggregat um einen Innenmischer und einem daran anschließenden Kneter, in dem mögliche Vernetzer oder Beschleuniger zugesetzt werden, handelt, gemischt werden,
die nicht expandierten Mikroballons erst nach Abkühlung der aus dem Mischaggregat stammenden Trägermischung in einem Walzenstuhl in dieselbe eingearbeitet werden, die Trägermischung mitsamt der nicht expandierten Mikroballons in ein Förderaggregat, wobei es sich bei dem Förderaggregat um einen Extruder handelt, aufgegeben wird,
die Mikroballons expandiert werden,
die Trägermischung mitsamt der expandierten Mikroballons in einem Ausformaggregat, wobei es sich bei dem Ausformaggregat um einen Kalander handelt, zu einer Trägerschicht ausgeformt wird
die Trägerschicht ein- oder beidseitig mit einer druckempfindlichen Klebemasse beschichtet wird.

2. Verfahren nach Anspruch 1 **dadurch gekennzeichnet, dass**
die Trägerschicht mit einem oder mehreren Additiven wie Alterungsschutzmitteln, Vernetzern, Lichtschutzmitteln, Ozonschutzmitteln, Fettsäuren, Harzen, Weichmachern und Vulkanisationsmitteln, Elektronenstrahlhärtungspromotoren oder UV-Initiatoren und/oder mit einem oder mehreren Füllstoffen wie Ruß, Zinkoxid, Kieselsäure, Silikaten, Kreide und Voll- oder Hohlkugeln abgemischt wird.

3. Verfahren nach mindestens einem der vorigen Ansprüche, **dadurch gekennzeichnet, dass**
die Trägerschicht ganz oder teilweise chemisch oder physikalisch mittels ionisierender Strahlung vernetzt wird.

4. Verfahren nach mindestens einem der vorigen Ansprüche, **dadurch gekennzeichnet, dass**
das Flächengewicht der Trägerschicht im Bereich von 30 g/m² bis 2000 g/m², insbesondere 200 g/m² bis 1250 g/m². liegt und/oder die die expandierten Mikroballons enthaltene Trägerschicht eine Dicke von 200 µm bis 4000 µm, insbesondere 400 µm bis 2500 µm, aufweist

5. Verfahren nach mindestens einem der vorigen Ansprüche, **dadurch gekennzeichnet, dass**
die Mikroballons bei 25 °C einen Durchmesser von 3 µm bis 40 µm, insbesondere 5 µm bis 20 µm, und/oder nach Temperatureinwirkung einen Durchmesser von 20 µm bis 200 µm, insbesondere 40 µm bis 100 µm, aufweisen.

6. Verwendung eines Selbstklebebandes nach zumindest einem der vorherigen Ansprüche zur Erzielung von dauerhaften Verklebungen mit hoher Scherfestigkeit, Kippscherfestigkeft, hoher Klebkraft und hoher Kälteschlagfestigkeit.

## Claims

1. Method for producing a self-adhesive tape which is coated on one or both sides with a pressure-sensitive adhesive and which has a carrier layer which comprises expanded microballoons in a volume fraction of 1% to 98% by volume, more particularly 30% to 70% by volume, where
the carrier layer is formed using natural, acrylonitrile-butadiene, butyl or styrenebutadiene rubbers or a blend of said rubbers,
the carrier constituents are mixed in a mixing assembly, the mixing assembly comprising an internal mixer and a downstream kneading apparatus in which possible crosslinkers or accelerators are added,
the unexpanded microballoons are incorporated into the carrier mixture coming from the mixing assembly only after the mixture has cooled, said incorporation taking place on a roll mill,
the carrier mixture together with the unexpanded microballoons is applied to a conveying assembly, the conveying assembly comprising an extruder,
the microballoons are expanded,
the carrier mixture together with the expanded microballoons is shaped to a carrier layer in a shaping assembly, the shaping assembly comprising a calender,
the carrier layer is coated on one or both sides with a pressure-sensitive adhesive.

2. Method according to Claim 1, **characterized in that** the carrier layer is blended with one or more additives such as ageing inhibitors, crosslinkers, light stabilizers, ozone protectants, fatty acids, resins, plasticizers and vulcanizing agents, electron beam curing promoters or UV initiators and/or with one or more fillers such as carbon black, zinc oxide, silica, silicates, chalk and solid or hollow spheres.

3. Method according to at least one of the preceding claims, **characterized in that**
the carrier layer is crosslinked wholly or partly chemically or physically by means of ionizing radiation.

4. Method according to at least one of the preceding claims, **characterized in that**
the weight per unit area of the carrier layer is in the range of 30 g/m² to 2000 g/m², more particularly 200 g/m² to 1250 g/m², and/or the carrier layer comprising the expanded microballoons has a thickness of 200 µm to 4000 µm, more particularly 400 µm to 2500 µm.

5. Method according to at least one of the preceding claims, **characterized in that**
the microballoons at 25°C have a diameter of 3 µm to 40 µm, more particularly 5 µm to 20 µm, and/or after temperature exposure have a diameter of 20 µm to 200 µm, more particularly 40 µm to 100 µm.

6. Use of a self-adhesive tape according to at least one of the preceding claims for obtaining durable adhesive bonds with high shear strength, tip-shear strength, high bond strength and high low-temperature impact strength.

## Revendications

1. Procédé pour la fabrication d'un ruban autoadhésif revêtu sur une face ou sur les deux avec une matière adhésive sensible à la pression, qui comporte une couche de support qui contient des microballons expansés en une proportion en volume de 1 % en volume à 98 % en volume, en particulier de 30 % en volume à 70 % en volume, dans lequel
pour la formation de la couche de support, on utilise des caoutchoucs naturels, acrylonitrile-butadiène, butyle, styrène-butadiène ou un mélange des caoutchoucs nommés,
on mélange les composants du support dans un appareil de mélange, l'appareil de mélange consistant en un mélangeur interne et un malaxeur y faisant suite, dans lequel on ajoute d'éventuels agents de réticulation ou accélérateurs,
on n'incorpore les microballons non expansés dans le mélange de support provenant de l'appareil de mélange qu'après refroidissement de ce mélange de support, dans un broyeur à cylindre,
on introduit le mélange de support conjointement avec les microballons non expansés dans un appareil de transport, l'appareil de transport consistant en une extrudeuse,
les microballons sont expansés,
on met en forme d'une couche de support le mélange de support conjointement avec les microballons expansés dans un appareil de mise en forme, l'appareil de mise en forme consistant en une calandre,
on revêt la couche de support, sur une face ou sur les deux, avec une matière adhésive sensible à la pression.

2. Procédé selon la revendication 1, **caractérisé en ce qu'**on mélange la couche de support avec un ou plusieurs additifs tels que des agents antivieillissement, agents de réticulation, photoprotecteurs, agents de protection contre l'ozone, acides gras, résines, plastifiants et agents de vulcanisation, promoteurs de durcissement par faisceaux d'électrons ou amorceurs UV et/ou une ou plusieurs charges telles que le noir de carbone, l'oxyde de zinc, l'acide silicique, des silicates, la craie et des sphères creuses ou pleines.

3. Procédé selon au moins l'une quelconque des revendications précédentes, **caractérisé**
**en ce qu'**on soumet la couche de support en partie ou en totalité à une réticulation chimique ou physique au moyen d'un rayonnement ionisant.

4. Procédé selon au moins l'une quelconque des revendications précédentes, **caractérisé**
**en ce que** le poids par unité de surface de la couche de support se situe dans la plage allant de 30 g/m² à 2 000 g/m², en particulier de 200 g/m² à 1 250 g/m² et/ou la couche de support contenant les microballons expansés présente une épaisseur de 200 µm à 4 000 µm, en particulier de 400 µm à 2 500 µm.

5. Procédé selon au moins l'une quelconque des revendications précédentes, **caractérisé**
**en ce que** les microballons ont à 25 °C un diamètre de 3 µm à 40 µm, en particulier de 5 µm à 20 µm, et/ou après action de la température un diamètre de 20 µm à 200 µm, en particulier de 40 µm à 100 µm.

6. Utilisation d'un ruban autoadhésif selon au moins l'une quelconque des revendications précédentes, pour la réalisation de collages durables à haute résistance au cisaillement, résistance au cisaillement oblique, grand pouvoir adhésif et haute résistance aux chocs à froid.
